# EUROPEAN PATENT APPLICATION

(11) **EP 4 714 538 A1**
(43) Date of publication of application: **25.03.2026**
(21) Application number: 24825806.3
(22) Date of filing: 13.06.2024
(51) Int. Cl.: B01J 20/20, B01D 53/04, B01J 20/34, C01B 32/36

(54) **METHOD FOR REGENERATING MOLECULAR SIEVING CARBON**

(30) Priority: 23.06.2023 JP 2023103384
(71) Applicant: Kuraray Co., Ltd., Kurashiki-shi, Okayama 710-0801 (JP)
(72) Inventor: NAKADA, Haruo, Tokyo 100-0004 (JP); SHIMIZU, Kazuya, Tokyo 100-0004 (JP); IWASAKI, Hideharu, Osaka-shi, Osaka 530-8611 (JP); KIKUCHI, Masaya, Osaka-shi, Osaka 530-8611 (JP)
(74) Representative: Müller-Boré & Partner Patentanwälte PartG mbB
(86) International application number: PCT/JP2024/021453
(87) International publication number: WO 2024/262401

(57) **Abstract**

One aspect of the present invention relates to a method for regenerating carbon molecular sieve with controlled pores, including performing a heat treatment using a heating gas that is substantially free of oxygen and carbon dioxide.

## Description

### Technical Field

The present invention relates to a method for regenerating carbon molecular sieve with controlled pores.

### Background Art

The gas separation method mainly includes a pressure swing method (hereinafter referred to as a PSA method), a membrane separation method, a liquid absorption method, and the like. These gas separation methods are not limited to production of high-purity nitrogen by separation of nitrogen gas and oxygen gas, but are also applied to separation of methane (CH₄) from biogas and digested gas (Patent Literatures 1, 2 and 3).

Among these methods, in the PSA method, carbon molecular sieve is used as an adsorbent. Carbon molecular sieve is useful as an adsorbent excellent in heat resistance, chemical resistance, and the like, but it is not easy to control the pore distribution thereof. So far, many studies have been conducted on control of pore distribution of carbon molecular sieve (for example, Non-Patent Literature 1).

As an example of a method for controlling pores, spherical carbon particles obtained by calcining and carbonizing phenol resin particles in an inert gas atmosphere and the like have been reported (Patent Literature 4). More specifically, it has been reported that the spherical carbon particles described in this literature are carbon particles for carbon dioxide gas fixation that selectively adsorb carbon dioxide gas, and are obtained by calcining and carbonizing phenol resin particles having an average particle size of 100 µm or less after carbonization at 800 to 1200°C in an inert gas atmosphere.

In addition, as a method for modifying and improving gas separation characteristics of carbon molecular sieve, a method for improving oxygen/nitrogen separation performance by subjecting a surface of coconut shell carbon to a pore adjustment treatment by chemical vapor deposition of a pyrolytic hydrocarbon at 600 to 770°C has been reported (Patent Literature 5). Furthermore, there has also been reported a method for modifying gas separation characteristics of carbon molecular sieve by mixing the carbon molecular sieve with a diluent gas composed of helium under pyrolysis conditions and bringing the carbon molecular sieve into contact with a volatile carbon-containing organic compound in a gaseous state (Patent Literature 6).

As described above, carbon molecular sieve is useful as an adsorbent in a PSA method or the like, and a method for controlling the pore distribution and a method for modifying the separation characteristics have been reported so far. However, deterioration of separation characteristics of carbon molecular sieve with controlled pores due to contaminants contained in the air is an unavoidable problem. However, considerable difficulty is expected in regenerating such carbon molecular sieve without affecting pores and surface treatment (coating), and a specific regeneration method has not yet been discussed.

### Citation List

### Non Patent Literature

Non-Patent Literature 1: Vacuum No. 35 (1992), No. 12, pages 965-971

### Patent Literature

Patent Literature 1: JP 2003-320221 A
Patent Literature 2: JP 6-173119 A
Patent Literature 3: JP 8-67513 A
Patent Literature 4: JP 11-79722 A
Patent Literature 5: WO 2003/018189 A
Patent Literature 6: JP 5-49920 A

### Summary of Invention

Therefore, a main object of the present invention is to provide a method for regenerating carbon molecular sieve with reduced gas separation performance.

As a result of intensive studies to solve the above problems, the present inventors have found that the above problems can be solved by a method having the following configuration, and have completed the present invention by further conducting studies based on the findings.

That is, a method for regenerating carbon molecular sieve according to one aspect of the present invention is a method for regenerating carbon molecular sieve with controlled pores, and includes performing a heat treatment using a heating gas that is substantially free of oxygen and carbon dioxide.

### Brief Description of Drawings

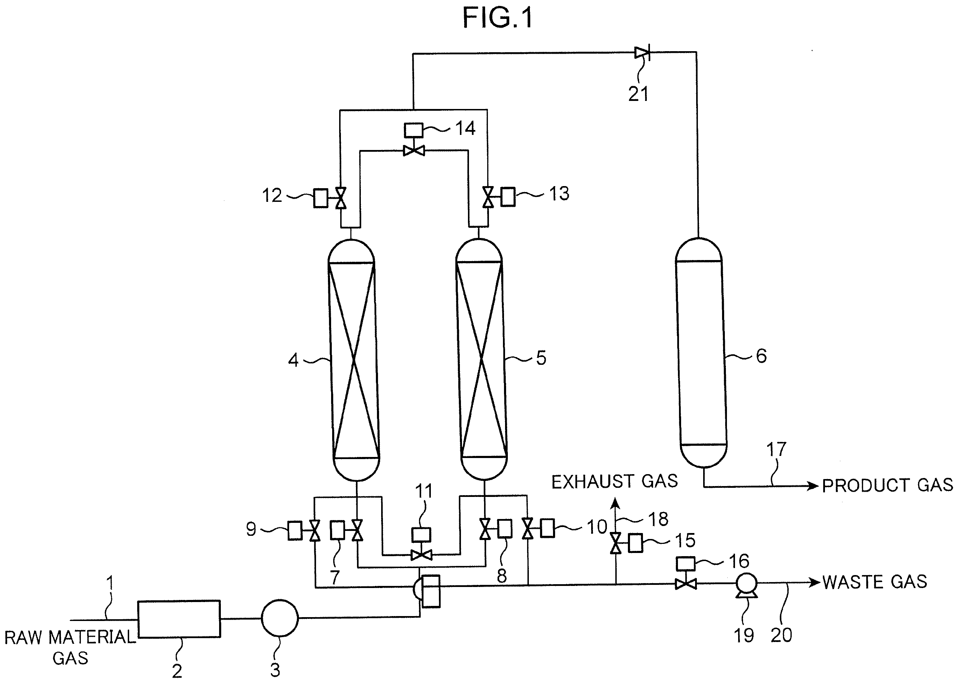

FIG. 1 is a schematic diagram showing a configuration of a PSA apparatus used in Examples.

### Description of Embodiments

Hereinafter, embodiments according to the present invention will be specifically described, but the present invention is not limited thereto.

The regeneration method of the present embodiment is a method for regenerating carbon molecular sieve with controlled pores, and includes performing a heat treatment using a heating gas that is substantially free of oxygen and carbon dioxide. With such a configuration, the deteriorated carbon molecular sieve can be regenerated, and the gas separation performance can be recovered.

First, carbon molecular sieve used in the present embodiment will be described.

The carbon molecular sieve used in the regeneration method of the present embodiment is carbon molecular sieve with controlled pores obtained by carbonizing and/or activating a raw material having a large number of pores at a high temperature. The raw material is not particularly limited, and for example, plant-derived materials such as coal, coconut shell, rice husk, grain husk, beer cake, liquor cake, lignin, and cellulose, synthetic resins such as phenol resin, and the like can be used. When the raw material is carbonized, the carbonization can be usually performed with oxygen or air blocked at a temperature of, for example, about 400 to 800°C, preferably 450 to 800°C, and still more preferably 480 to 750°C. Also, as the activation method, either a gas activation method or a chemical activation method can be adopted, and the gas activation method and the chemical activation method may be combined. The carbon molecular sieve obtained by carbonization and/or activation as described above has a large number of pores, and the pores are controlled to have a desired pore diameter or the like.

The method for controlling pores in the carbon molecular sieve is not particularly limited, and for example, as the surface treatment, a hydrocarbon gas such as methane, ethylene, or toluene is thermally decomposed, and the pyrolysis product (pyrolytic carbon) is attached to the pore walls to adjust the pore diameter, whereby the pore distribution can be controlled.

In the present embodiment, the "pores" are not particularly limited, but mean pores having a pore diameter of about 0.1 to 5 nm. Also, the carbon molecular sieve having pores of the present embodiment preferably has a specific surface area of, for example, 500 m²/g or less, more preferably 400 m²/g or less, and still more preferably 300 m²/g or less.

Carbon molecular sieve is excellent in gas separation performance of a mixed gas, and is suitably used for separation of a mixed gas and the like as an adsorbent in a PSA method. The regeneration method of the present embodiment is used for separation of a mixed gas, and can regenerate carbon molecular sieve with deteriorated separation performance.

The mixed gas is not particularly limited, and the method of the present embodiment can regenerate carbon molecular sieves used for separation of various mixed gases. Examples of the mixed gas include a mixed gas containing nitrogen and oxygen, a mixed gas containing methane and carbon dioxide, a mixed gas containing nitrogen and carbon dioxide, and a mixed gas containing nitrogen and methane. Among them, the carbon molecular sieve to be regenerated in the present embodiment is preferably a carbon molecular sieve used for separation of a mixed gas which is at least one selected from a mixed gas containing nitrogen and oxygen and a mixed gas containing methane and carbon dioxide.

In the present embodiment, the carbon molecular sieve is used as an adsorbent of a PSA apparatus or the like for a certain period of time, and the deteriorated carbon molecular sieve is regenerated. Specifically, for example, the mixed gas is separated in a PSA apparatus or the like, and after a predetermined time elapses, the carbon molecular sieve installed on the adsorption tower of the PSA apparatus is taken out, and the regeneration method of the present embodiment can be performed. The degree of deterioration of the used carbon molecular sieve to be regenerated is not particularly limited, but it is preferable to perform regeneration, for example, when the separation performance is reduced by about 10 to 50% as compared with that before use.

The regeneration method according to the present embodiment includes heat-treating carbon molecular sieve used for separation of a mixed gas using a heating gas that is substantially free of oxygen and carbon dioxide. The method of the heat treatment is not particularly limited, and the heat treatment can be performed by a method of heating carbon molecular sieve by a heated gas, a method of conducting heat from an outer wall of a heat treatment furnace, a method of generating heat by vibration of carbon like a microwave, or the like. In consideration of equipment load, versatility, and the like, a method of heating by a heated gas is preferable. Such a heat treatment can be performed, for example, by charging carbon molecular sieve into a reactor as it is and heating the reactor using a heating gas.

The heating gas used in the present embodiment is a gas that is substantially free of oxygen and carbon dioxide. The phrase "substantially free of oxygen and carbon dioxide" means that the heating gas does not contain both of oxygen and carbon dioxide to a degree strongly related to combustion and oxidation. Specifically, the heating gas is a heating gas having a content of oxygen and a content of carbon dioxide of 3 vol% or less, preferably 2 vol% or less, and more preferably 1 vol% or less.

By the heat treatment, foreign matters such as oil adhering to the surface when used for gas separation can be decomposed and removed, and the gas separation performance of carbon molecular sieve can be regenerated. At this time, if oxygen and carbon dioxide are contained in the heating gas to such an extent that the oxygen and carbon dioxide are strongly related to combustion and oxidation, activation or the like proceeds during heating, and the structure of pores or the like of carbon molecular sieve may change, leading to performance deterioration. In addition, a weight reduction due to combustion or the like may also occur. Therefore, by heating with a gas that does not substantially contain oxygen and carbon dioxide, it is possible to remove only the adsorption inhibitor without changing the physical properties of the carbon molecular sieve, and it is possible to suppress performance deterioration and weight reduction of the carbon molecular sieve.

Examples of such a heating gas include inert gases such as helium, nitrogen, and argon, and superheated steam, and these gases may be used alone or in combination. From the viewpoint of thermal conductivity, the heating gas of the present embodiment preferably contains superheated steam. Since water vapor has a high thermal conductivity and a low activation temperature, the heating gas contains superheated steam so that it is possible to decompose and remove only foreign matters such as oil adhering to the surface when used for gas separation from the used carbon molecular sieve without impairing the surface treatment (coating or the like) applied to the surface. As a result, carbon molecular sieve can be regenerated without deteriorating gas separation performance originally provided by carbon molecular sieve.

Furthermore, the heating gas may be a mixed gas of superheated steam and nitrogen. When only superheated steam is used, the thermal conductivity may be too high. Therefore, by mixing nitrogen gas with a relatively low thermal conductivity, an increase in heat treatment temperature or the like can be easily controlled.

The ratio of the superheated steam in the heating gas or the ratio of the mixed gas containing superheated steam and nitrogen gas is preferably 10 vol% or more, and more preferably 100 vol%.

When the heating gas is a mixed gas containing superheated steam and nitrogen gas, the ratio (molar ratio) of the superheated steam and the nitrogen gas in the mixed gas may be in the range of water vapor: nitrogen gas = 1: 100 to 100: 1, more preferably in the range of 10: 90 to 100: 1, and still more preferably in the range of 50: 50 to 100: 1 in consideration of thermal conductivity. The mixed gas may contain a gas other than the superheated steam and the nitrogen gas in an amount that does not inhibit the effect of the present invention.

The flow rate of the heating gas in the heat treatment of the present embodiment is not particularly limited because it depends on the amount of carbon molecular sieve to be charged into the reactor. Preferably, the flow rate is adjusted to usually the range of 0.01 L/min to 10,000 L/min, more preferably the range of 0.1 L/min to 8,000 L/min, and still more preferably the range of 0.4 L/min to 4,000 L/min, in order to facilitate heat conduction to the carbon molecular sieve and to more easily sweep foreign matters adhering to the carbon molecular sieve.

The temperature of the heat treatment of the present embodiment may be a temperature at which a substance adhering to the surface of the carbon molecular sieve and blocking pores (foreign matter adhering as a result of gas separation) is decomposed and removed. In addition, when the carbon material is carbon molecular sieve in which pores are adjusted by surface treatment (deposits and coatings by pyrolytic carbon), the temperature of the heat treatment is not particularly limited as long as it is in the temperature range in which the pyrolytic carbon deposits and the like for adjusting the pores are not decomposed. The heat treatment of the present embodiment is usually performed in the temperature range of 300°C to 700°C. When the heat treatment temperature is too high, the pores of the carbon molecular sieve may be blocked, which is not preferable. From the viewpoint of thermal conduction time and/or carbon molecular sieve damage avoidance, the heat treatment temperature is more preferably 400°C to 650°C, and still more preferably 450°C to 600°C.

The time for heating the carbon molecular sieve (heat treatment time) is not particularly limited as long as the gas separation performance of the carbon molecular sieve can be regenerated, and can be appropriately determined based on the size and amount of the carbon molecular sieve, the adsorption amount of the adsorbed substance, and the like. Usually, the retention time is in the range of 1 minute to 600 minutes. When the heating time is too short, decomposition and removal of the surface deposit may not be sufficiently performed. On the other hand, if the heating time is too long, the pores of the regenerated carbon molecular sieve are blocked by heat, which may deteriorate the performance, which is not preferable. The heat treatment is performed more preferably in the range of 5 minutes to 500 minutes, and still more preferably in the range of 10 minutes to 480 minutes.

In the present embodiment, the method of the heat treatment is not particularly limited, and the heat treatment can be performed in a batch process or a continuous process. From the viewpoint of regeneration efficiency, the heat treatment is preferably performed in a continuous process.

In the case of the batch process, the heat treatment can be performed as follows: carbon molecular sieve to be regenerated is put in an atmosphere-controllable apparatus such as a box furnace, and after or while removing oxygen from the inside of the furnace, heated to adjust the temperature to be substantially in the absence of oxygen when a predetermined temperature is reached, and treated at a predetermined temperature for a predetermined time.

On the other hand, in the case of performing the heat treatment in the continuous process, carbon molecular sieve to be regenerated and a heated gas can be continuously charged into a tubular furnace such as a rotary kiln, as an apparatus, in a substantially oxygen-free state when a predetermined temperature is reached. The heat treatment can also be performed by a method in which carbon molecular sieve is continuously carried into a tunnel furnace such as a belt furnace or a pusher furnace, and the carbon molecular sieve is passed through a heating gas band continuously blown so that an environment substantially not containing oxygen is maintained.

In the present embodiment, by the heat treatment, organic substances such as oil adhering to the carbon molecular sieve due to use for gas separation are decomposed and volatilized. At the time of decomposition by the heat treatment, a part of the organic substances is oxidatively decomposed into carbon dioxide, but the volatiles may partially contain a harmful substance. Since such a substance cannot be released as it is to the atmosphere, it is detoxified by absorption of an acidic substance by an alkali scrubber, decomposition by flame combustion, decomposition by catalytic combustion, and the like as necessary.

After heat treatment, the carbon molecular sieve can be cooled before being taken out from the reactor. The temperature at the time of taken out is preferably a temperature at which the carbon molecular sieve is not oxidized by oxygen in the air. Therefore, it is preferable that the carbon molecular sieve is cooled to 300°C or lower, and still more preferably 200°C or lower in the reactor, and then exposed to the atmosphere.

In the present embodiment, the carbon molecular sieve regenerated by the heat treatment can be recovered as it is and reused again as an adsorbent or the like of the PSA apparatus for separation of the mixed gas.

The carbon molecular sieve regenerated by the regeneration method of the present embodiment is restored and regenerated in gas separation performance and the like.

The present specification discloses various aspects of the technology as described above, and the main technologies are summarized below.

A method for regenerating carbon molecular sieve according to a first aspect of the present invention is a method for regenerating carbon molecular sieve with controlled pores, and includes performing a heat treatment using a heating gas that is substantially free of oxygen and carbon dioxide.

With such a configuration, the deteriorated carbon molecular sieve can be regenerated, and the gas separation performance can be recovered.

A method for regenerating carbon molecular sieve according to a second aspect of the present invention is the method for regenerating carbon molecular sieve according to the first aspect, in which the heating gas contains superheated steam. Accordingly, it is considered that carbon molecular sieve can be regenerated without deteriorating gas separation performance originally provided by carbon molecular sieve.

A method for regenerating carbon molecular sieve according to a third aspect of the present invention is the method for regenerating carbon molecular sieve according to the first or second aspect, in which a temperature of the heat treatment is 300 to 700°C. It is considered that by performing the heat treatment in such a temperature range, it is possible to prevent the pores of the carbon molecular sieve from being blocked by high temperature.

A method for regenerating carbon molecular sieve according to a fourth aspect of the present invention is the regeneration method according to any one of the first to third aspects, in which the carbon molecular sieve is carbon molecular sieve used for separating a mixed gas. Accordingly, it is considered that the effects as described above can be further exhibited.

A method for regenerating carbon molecular sieve according to a fourth aspect of the present invention is the regeneration method according to any one of the first to fourth aspects, in which the mixed gas is at least one selected from a mixed gas containing nitrogen and oxygen and a mixed gas containing methane and carbon dioxide. Accordingly, it is considered that the effects as described above can be further exhibited.

### Examples

Hereinafter, the present invention will be described more specifically with reference to Examples, but the present invention is not limited by Examples at all.

### <Production of carbon molecular sieve>

### (Reference Production Example 1) Carbon molecular sieve A

To 100 parts by weight of finely pulverized coconut shell carbon, 40 parts by weight of coal tar and 8 parts by weight of water were added and thoroughly kneaded, and pressed with a hydraulic press machine to form a cylindrical shape extruded from a 0.8 mm nozzle. The resulting cylindrical granulated carbon was heat-treated at 600°C for 30 minutes using a fluidized dry distillation furnace and cooled in nitrogen.

Subsequently, the resulting carbon was sufficiently immersed in 0.6 N (normal) hydrochloric acid at 80°C while being stirred, and then the hydrochloric acid was separated by filtration. This hydrochloric acid washing was repeated three times, and the resulting carbon was washed with water and then dried to obtain refined carbon. The obtained refined carbon was charged into an external thermal electric furnace, heat-treated at 900°C, and cooled in nitrogen gas. Thereafter, the refined carbon was sufficiently impregnated with creosote oil by adding 3 parts by weight of a 140 to 260°C fraction of creosote oil and raising the temperature from normal temperature to 400°C in 20 minutes under a small flow of nitrogen gas in a rotary kiln. Furthermore, the resulting refined carbon was heat-treated by raising the temperature to 700°C in 20 minutes, and then cooled to normal temperature in nitrogen to obtain carbon molecular sieve A. The obtained carbon molecular sieve A had a specific surface area of 270 m²/g.

### (Reference Production Example 2) Carbon molecular sieve B

A dry distillate obtained by granulating a phenol resin and dry-distilling the granulated phenol resin at 450 to 750°C was weakly activated by heat treatment at 800°C for 3 hours in a mixed gas atmosphere of 20% carbon dioxide gas and 80% nitrogen. Next, the resulting treated product was heat-treated in nitrogen gas at a treatment temperature of 1000°C for 1 hour. Further, exposure treatment was performed with a nitrogen gas containing 10% ethylene at 750°C for 1 hour. Thereafter, the resulting product was cooled to normal temperature in nitrogen gas to obtain carbon molecular sieve B. The obtained carbon molecular sieve B had a specific surface area of 227 m²/g.

### <Use of carbon molecular sieve>

(Use Examples 1 to 4)

The carbon molecular sieves A and B obtained above were used to perform adsorption separation of nitrogen/oxygen gas by a PSA method. A PSA apparatus shown in FIG. 1 was used for gas separation in this test. Each reference sign in the figure indicates the following: 1 source gas supply line, 2 compressor, 3 cooler, 4 and 5 adsorption tower, 6 product tank, 7 to 16 valve, 17 product gas extraction line, 18 exhaust gas line, 19 vacuum pump, 20 waste gas line, 21 check valve.

First, the adsorption towers 4 and 5 of the PSA apparatus of FIG. 1 were each filled with 3.0 L of the carbon molecular sieve A or B.

Then, under the conditions shown in the following Table 1, adsorption separation of nitrogen/oxygen gas using the PSA apparatus was performed. Then, after the lapse of the operating time shown in Table 1, the nitrogen gas generation amount and the air basic unit of the carbon molecular sieve used in each use example were calculated by operating the PSA apparatus at a predetermined pressure so as to have an oxygen concentration of 100 ppm (nitrogen purity: 99.99%), and measuring the nitrogen generation amount and the air usage amount.

In the table, the "NL" is a normal liter, and represents the amount of nitrogen gas in the standard state.

**[Table 1]**

| | Carbon molecular sieve | Pressure | Operating time | Oxygen concentration | Nitrogen gas generation amount | Air basic unit |
|---|---|---|---|---|---|---|
| | | [MPa] | [Hr] | [ppm] | [NL/L/min] | [NL/NL] |
| Use Example 1 | A | 0.64 | 10 | 100 | 2.7 | 4.25 |
| Use Example 2 | A | 0.64 | 7200 | 100 | 2.4 | 4.72 |
| Use Example 3 | B | 0.64 | 10 | 100 | 2.5 | 4.51 |
| Use Example 4 | B | 0.64 | 7200 | 100 | 2.1 | 5.31 |

From Table 1, by comparison of Use Example 1 and Use Example 3 with Use Example 2 and Use Example 4, it can be seen that the carbon molecular sieve A of Use Example 2 and the carbon molecular sieve B of Use Example 4, which were adsorbed for 7200 hours, have deteriorated gas separation performance.

### <Regeneration of carbon molecular sieve>

### (Example 1)

200 g of the carbon molecular sieve A with deteriorated performance used in Use Example 2 was placed in a box furnace to which a superheated steam generator "UPSS W-20H" (manufactured by TOKUDEN CO., LTD.) was connected. Then, carbon molecular sieve was regenerated by performing heat treatment in a superheated steam atmosphere (steam amount: 2 kg/Hr, oxygen content rate: 5 ppm (0.0005%)) by setting the temperature set to 500°C and the treatment time (30 minutes). After 30 minutes, the temperature was cooled to 200°C and the treated product (regenerated carbon molecular sieve) was taken out.

The nitrogen gas generation amount and the air basic unit of the resulting regenerated carbon molecular sieve were calculated by filling the PSA apparatus shown in FIG. 1 with the resulting regenerated carbon molecular sieve, operating the PSA apparatus at a predetermined pressure so as to have an oxygen concentration of 100 ppm (nitrogen purity: 99.99%), and measuring the nitrogen generation amount and the air usage amount at the initial operation of 1 hour. The results are shown in Table 2.

### (Example 2)

The carbon molecular sieve was regenerated in the same manner as in Example 1 except that the temperature of the heat treatment was changed to 600°C. The nitrogen gas generation amount and the air basic unit of the resulting regenerated carbon molecular sieve were measured in the same manner as in Example 1. The results are shown in Table 2.

### (Example 3)

Carbon molecular sieve was regenerated in the same manner as in Example 1 except that the deteriorated carbon molecular sieve B obtained in Use Example 4 was used as a target for regeneration in place of the carbon molecular sieve A obtained in Use Example 2. The nitrogen gas generation amount and the air basic unit of the resulting regenerated carbon molecular sieve were measured in the same manner as in Example 1. The results are shown in Table 2.

### (Example 4)

The carbon molecular sieve was regenerated in the same manner as in Example 1 except that the temperature of the heat treatment was changed to 300°C. The nitrogen gas generation amount and the air basic unit of the resulting regenerated carbon molecular sieve were measured in the same manner as in Example 1. The results are shown in Table 2.

### (Example 5)

Carbon molecular sieve was regenerated in the same manner as in Example 1 except that the conditions for the heat treatment were changed to introduction of heated nitrogen at 500°C without introduction of superheated steam and a treatment time of 1.5 hours. The nitrogen gas generation amount and the air basic unit of the resulting regenerated carbon molecular sieve were measured in the same manner as in Example 1. The results are shown in Table 2.

### (Comparative Example 1)

Carbon molecular sieve was regenerated in the same manner as in Example 1 except that air was introduced into the atmosphere in the box furnace at 250 L/Hr simultaneously with superheated steam. The nitrogen gas generation amount and the air basic unit of the resulting regenerated carbon molecular sieve were measured in the same manner as in Example 1. The results are shown in Table 2.

### (Comparative Example 2)

200 g of the carbon molecular sieve B with deteriorated performance obtained in Use Example 4 was placed in a box furnace, and heat-treated at 800°C for 180 minutes in a mixed gas atmosphere of 20% carbon dioxide gas and 80% nitrogen to regenerate the carbon molecular sieve. After 30 minutes, the temperature was cooled to 200°C and the treated product (regenerated carbon molecular sieve) was taken out. The nitrogen gas generation amount and the air basic unit of the resulting regenerated carbon molecular sieve were measured in the same manner as in Example 1. The results are shown in Table 2.

**[Table 2]**

| | Carbon molecular sieve | Pressure | Operating time | Oxygen concentration | Nitrogen gas generation amount | Air basic unit |
|---|---|---|---|---|---|---|
| | | [MPa] | [Hr] | [ppm] | [NL/L/min] | [NL/NL] |
| Example 1 | Use Example 2 | 0.64 | 10 | 100 | 2.7 | 4.26 |
| Example 2 | Use Example 2 | 0.64 | 10 | 100 | 2.6 | 4.26 |
| Example 3 | Use Example 4 | 0.64 | 10 | 100 | 2.5 | 4.51 |
| Example 4 | Use Example 2 | 0.64 | 10 | 100 | 2.6 | 4.26 |
| Example 5 | Use Example 2 | 0.64 | 10 | 100 | 2.5 | 4.57 |
| Comparative Example 1 | Use Example 2 | 0.64 | 10 | 100 | 2.2 | 5.18 |
| Comparative Example 2 | Use Example 4 | 0.64 | 10 | 100 | 1.9 | 5.90 |

In Table 2, the "pressure" means the pressure when pressurized in the separation of PSA, the "operating time" means the operating time during which PSA was performed, and the "oxygen concentration" means the oxygen concentration in the nitrogen discharged (purified nitrogen) in PSA.

### (Discussion)

As is apparent from the results in Table 2, it was found that the carbon molecular sieves regenerated by the methods in Examples 1 to 3 recovered the gas separation performance to the same extent as in Use Examples 1 and 3, as compared with the state after 7200 hours of use (before heat treatment).

On the other hand, in Comparative Example 1 in which the heat treatment was performed using not only superheated steam but also air containing oxygen and carbon dioxide, the gas separation performance of the carbon molecular sieve was not recovered. In addition, the gas separation performance of the carbon molecular sieve was not recovered by the regeneration method of Comparative Example 2 in which the heat treatment was performed using the combustion gas containing carbon dioxide.

This application is based on Japanese Patent Application No. 2023-103384 filed on June 23, 2023, the contents of which are included in the invention of the present application.

In order to express the present invention, the present invention is appropriately and sufficiently described through the embodiments with reference to specific examples and the like in the above, but it should be recognized that a person skilled in the art can easily change and/or improve the above-described embodiments. Therefore, unless a change or improvement made by a person skilled in the art is at a level departing from the scope of rights of the claims described in the claims, the change or improvement is interpreted to be included in the scope of rights of the claims.

### Industrial Applicability

The present invention has wide industrial applicability in technical fields related to activated carbon, a method for regenerating the activated carbon, purified water using the activated carbon, and the like.

## Claims

1. A method for regenerating carbon molecular sieve with controlled pores, comprising performing a heat treatment using a heating gas that is substantially free of oxygen and carbon dioxide.

2. The regeneration method according to claim 1, wherein the heating gas contains superheated steam.

3. The regeneration method according to claim 1, wherein a temperature of the heat treatment is 300 to 700°C.

4. The regeneration method according to claim 1, wherein the carbon molecular sieve is carbon molecular sieve used for separation of a mixed gas.

5. The regeneration method according to claim 4, wherein the mixed gas is at least one selected from a mixed gas containing nitrogen and oxygen and a mixed gas containing methane and carbon dioxide.
